Europäisches Patentamt

**European Patent Office**

Office européen des brevets

(11) Numéro de publication: **0014135**
**B1**

# FASCICULE DE BREVET EUROPEEN

(45) Date de publication du fascicule du brevet:
15.06.83

(51) Int. Cl.³ **B 26 D 7/01,** A 22 C 25/18

(21) Numéro de dépôt: **80400076.8**

(22) Date de dépôt **17.01.80**

(54) **Dispositif de tranchage de saumon.**

(30) Priorité: 18.01.79 FR 7901258

(43) Date de publication de la demande:
06.08.80 Bulletin 80/16

(45) Mention de la délivrance du brevet:
15.06.83 Bulletin 83/24

(84) Etats contractants désignés:
**BE DE GB IT**

(56) Documents cités:
**FR-A-2 285 965**
**FR-A-2 395 707**
**US-A-2 043 361**
**US-A-2 126 458**

(73) Titulaire: **SAUMON P.C Société anonyme, 59-61 Rue de Picpus, F-75012 Paris (FR)**

(72) Inventeur: **Philippe, Joseph, Le Moulin aux Moines Cohiniax, F-22800 Quintin (FR)**

(74) Mandataire: **Fruchard, Guy et al, NOVAPAT-CABINET CHEREAU 107, boulevard Péreire, F-75017 Paris (FR)**

## Dispositif de tranchage de saumon

La présente invention concerne les dispositifs pour le tranchage de filets. Il est déjà connu de réaliser des dispositifs pour le tranchage de filets, notamment des filets de poisson. Ainsi, le brevet français n° 2 285 965 décrit un dispositif de coupe monté sur un châssis et comportant une lame tournant dans un plan sensiblement vertical, et une contre-plaque d'appui et une nacelle de support de filet montée de façon à pouvoir se déplacer suivant un mouvement de va-et-vient au voisinage de la lame tournante.

La présente invention a pour objet un dispositif perfectionné pour le tranchage de saumon, permettant des cadences de production très élevées, sans nuire, bien au contraire, à la qualité des produits découpés, et d'une utilisation et d'un entretien extrêmement simples.

La présente invention a pour autre objet de proposer un dispositif de tranchage du type considéré présentant une structure modulaire permettant d'effectuer très aisément tous les pré-réglages extrêmement précis nécessaires à l'obtention de tranches de bonne qualité, plus particulièrement pour l'obtention de filets de saumon reconstitués, et autorisant, sans modifier ces réglages délicats, une accessibilité excellente en vue de simplifier encore les opérations d'entretien.

La présente invention a pour autre objet encore de proposer un dispositif de tranchage du type considéré, de construction simple, de fonctionnement fiable et permettant d'effectuer des opérations de tranchage présentant les qualités requises avec un personnel non qualifié.

Pour ce faire, selon une caractéristique de la présente invention, un tel dispositif comprend un dispositif de coupe monté sur un bâti et incluant une lame tournante située dans un plan sensiblement vertical; une contreplaque d'appui, réglable par rapport à la lame tournante; une nacelle de support de filet montée de façon à pouvoir se déplacer suivant un mouvement sensiblement vertical au voisinage de la lame tournante; et des moyens d'entraînement commandables pour déplacer la nacelle suivant un mouvement linéaire de va-et-vient la nacelle comprenant un plateau support nervuré, à inclinaison réglable, et comportant en outre de moyens de guidage pour guider le filet lors de sa descente et de sa coupe et l'empêcher de remonter lors du mouvement de va-et-vient extrêmement rapide de la nacelle.

La demanderesse a en effet constaté que, pour des cadences atteignant, par exemple, 5 filets de saumon à la minute, l'accélération résultant des mouvements de va-et-vient verticaux de la nacelle soulevait des problèmes de tenue en place du saumon dans la nacelle en raison de l'inertie propre de celui-ci, les filets de saumon pouvant en effet atteindre des poids supérieurs à 4 kg.

Pour remédier à ce problème, et selon une autre caractéristique preferée de la présente invention, le dispositif de tranchage comporte, sur au moins la partie inférieure de la surface du plateau de la nacelle, au moins une rangée transversale de protubérance profilées vers le bas; celles-ci présentant avantageusement, en vue en plan du plateau, un profil de découpe dissymétrique par rapport à la direction longitudinale du plateau pour réaliser, outre des moyens de guidage s'opposant à la remontée du filet de saumon dans la nacelle, des moyens de maintien pour empêcher une rotation relative du corps du filet de saumon par rapport au plateau lors des opérations de coupe.

Selon une autre caractéristique preferée de la présente invention, une plaque est en outre montée articulée sur la nacelle, cette plaque étant rappelée par un organe élastique de façon à normalement porter par son bord inférieur dentelé contre la surface nervurée du plateau de la nacelle en formant un angle avec le plan du plateau, cette plaque définissant un passage de mise en place du saumon dans le dispositif et assurant en outre un maintien de la partie supérieure du filet de saumon pour s'opposer à sa remontée lors du mouvement de va-et-vient de la nacelle.

D'autres avantages de la présente invention ressortiront de la description suivante d'un mode de réalisation, donné à titre illustratif mais nullement limitatif, faite en relation avec des dessins annexés, sur lesquels:

La figure 1 est une vue schématique de côté d'un dispositif de tranchage de saumon selon la présente invention;

La figure 2 est une vue schématique en perspective, montrant l'agencement respectif du dispositif de coupe et de la structure support de la contre-plaque sur la machine de la figure 1;

La figure 3 est une vue en perspective schématique de la machine de la figure 1, montrant le dispositif de coupe et la structure support de la contre-plaque rabattus en position de dégagement;

La figure 4 est une vue schématique, en perspective, montrant l'agencement relatif de la structure de contrelame sur le dispositif de coupe;

La figure 5 est une vue de face de la partie inférieure du plateau de nacelle selon la présente invention;

La figure 6 est une vue en coupe longitudinale suivant la ligne 6-6 du plateau de la figure 5;

La figure 7 est une vue en coupe transversale suivant la ligne 7-7 du plateau de la figure 5;

La figure 8 est une vue en coupe transversale partielle, à plus grande échelle, d'une rangée de protubérances de guidage et de maintien du plateau suivant la ligne 8-8 de la figure 5;

La figure 9 est une vue en plan de la structure de contre-lame, la bavette de contre-lame étant supprimée; et

La figure 10 est une vue en coupe suivant la ligne 10-10 de la figure 9.

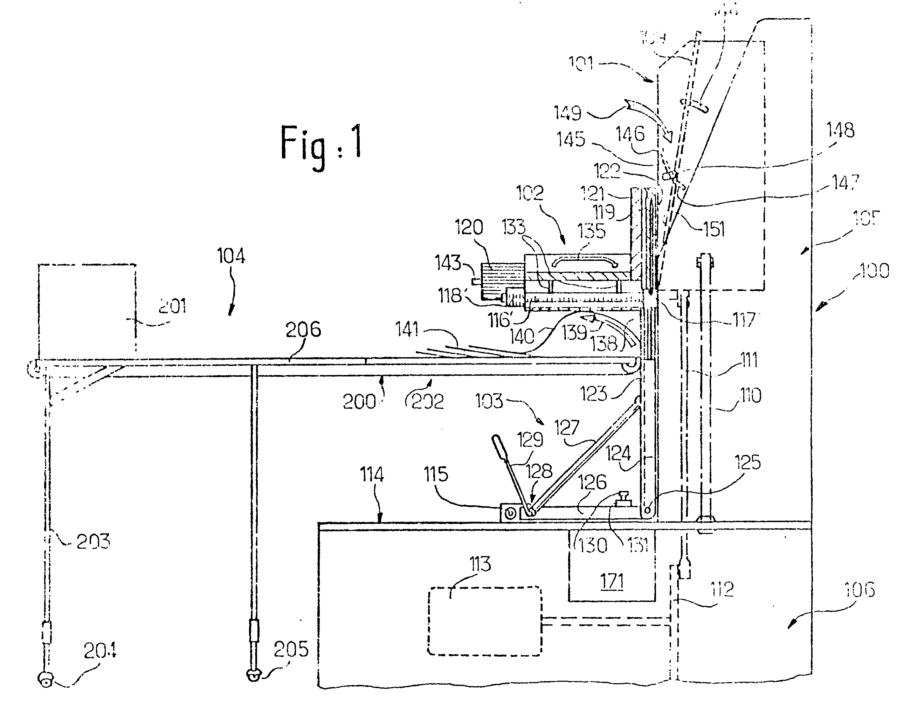

Comme on le voit sur les figures 1 à 4, le dispositif selon la présente invention comprend essentiellement un châssis porteur de forme générale en L, désigné globalement par la référence 100, dans lequel est montée de façon à pouvoir se déplacer suivant un mouvement linéaire de va-et-vient vertical une nacelle support de saumon, désignée globalement par la référence 101, et portant, d'une part, le dispositif de coupe à lame tournante, référencé 102, et une structure articulée de support de contre-plaque de coupe, généralement référencée 103. Le dispositif comporte, en outre, une structure de convoiement et de réception, généralement référencée 104, constituant une unité indépendante susceptible d'être amenée à coopérer avec la machine de coupe proprement dite.

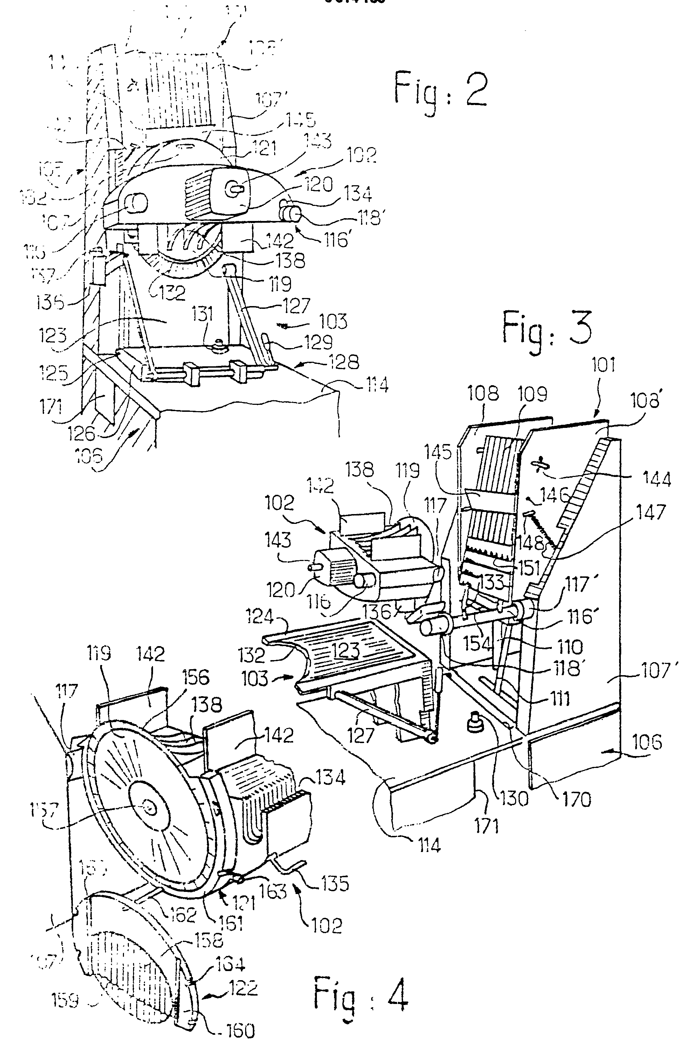

De façon plus spécifique, le châssis 100 en forme de L comporte une partie verticale 105 formant la première branche du L, dans laquelle est reçue la nacelle 101 et sur laquelle est monté le dispositif de coupe 102, et une partie horizontale inférieure 106, constituant la deuxième base du L et formant la base du châssis. Comme on le voit mieux sur les figures 2 et 3, la partie verticale 105 du châssis constitue un capotage en tôle comprenant notamment deux flancs latéraux, 107 et 107', définissant un volume interne rectangulaire pour la nacelle 101, la face avant de la nacelle affleurant le plan frontal ouvert délimité par les flancs 107, 107'. La nacelle 101 comporte deux joues ou plaques latérales 108, 108', parallèles aux flancs 107, 107' réalisées en un matériau plastique alimentaire entre lesquelles est monté un plateau support de saumon 109.

Dans le mode de réalisation représenté, la nacelle 101 est montée de façon à coulisser sur au moins deux colonnes verticales 110, solidaires du châssis 100, et est entraînée dans son mouvement de va-et-vient vertical par une bielle 111 reliée, à sa partie inférieure, à un plateau excentrique 112 entraîné en rotation par un groupe moto-réducteur électrique 113, le plateau et le groupe électrique étant logés dans la base 106 du châssis 100. Cette base 106 présente, à sa partie supérieure, une plaque ou surface d'appui 114, sur laquelle est montée à pivotement autour d'un axe horizontal 115 la structure support 103 de la contre plaque de coupe.

Conformément à un aspect preferé de la présente invention, le dispositif de coupe 102 est supporté par deux bras horizontaux 116, 116', s'étendant à partir de la face avant des flancs 107, et 107' du châssis 100. De façon plus spécifique, le dispositif de coupe est monté de façon à pouvoir tourner sur l'un de ses bras horizontaux, en l'occurrence, ici, le bras 116, pour venir se positionner en appui, dans la position de travail, sur l'autre bras horizontal 116'. Des douilles de réglage 117, 117', permettent de régler la position du bâti du dispositif de coupe 102, par rapport à la nacelle 101, le dispositif 102 étant bloqué en position de travail sur le bras horizontal 116' par une douille de serrage terminale 118', prévue à l'extrémité libre du bras support 116'.

Comme on le voit sur les dessins, le dispositif de coupe 102 comprend essentiellement une lame tournante 119, entraînée en rotation par un moteur 120. La partie supérieure de la lame 119 est logée dans un capot 121, qui sert en même temps au montage de la structure de contre-lame 122 comme on le verra plus loin. Coopérant avec la lame tournante 119, est prévue, de façon traditionelle, une contre-plaque 123 dont l'écartement par rapport au plan de coupe de la lame tournante 119 définit l'épaisseur des tranches. Selon une caractéristique particulière de la présente invention, la contre-plaque 123 est montée sur un cadre 124 articulé, à sa partie inférieure, au moyen d'un axe 125, sur une plaque d'embase 126, portant normalement en position de travail contre la surface supérieure de la plaque 114 de la base 106 du châssis et susceptible de pivoter, avec l'ensemble de la structure 103 présentant, en vue de côté, une forme générale en L, autour de l'axe horizontal 115 prévu à l'extrémité de l'embase 126 opposée à la contre-plaque 123 définissant une des branches du L. La figure 3 représente la structure 103 rabattue en position de dégagement, par exemple pour les opérations de nettoyage et de désinfection de la machine.

Conformément à une autre caractéristique preferée de la présente invention, le cadre 124 est déplaçable angulairement de façon réglable autour de l'articulation 125 par des bras diagonaux 127, articulés, à leur extrémité supérieure, sur le cadre 124, et à leur extrémité inférieure sur un excentrique 128, monté à pivotement sur l'embase 126, et actionnable manuellement par un levier 129. L'embase 126 est elle-même positionnée et maintenue de façon réglable, en position de travail, par des tétons 130 traversant des ouvertures (non représentées) ménagées dans la plaque d'embase 126, et des rondelles fendues 131 immobilisant l'embase 126 en position sur la plaque supérieure 114 du châssis 100. De cette façon, la structure 103 étant positionnée et réglée dans une position moyenne vis-à-vis de la lame tournante 119, l'actionnement du levier 129 permet de faire varier légèrement l'inclinaison de la contre-plaque 123 par rapport à la verticale et donc ainsi d'affiner ou de modifier son écartement vis-à-vis de la lame tournante 119, ce réglage pouvant s'effectuer en fonctionnement continu de la machine sans nuire à la qualité des tranches.

Comme on le voit sur les figures 2 et 3, la partie supérieure de la contre-plaque 123, est découpée en forme d'arc de cercle, de telle façon que le bord 132 vienne au voisinage immédiat de la périphérie tranchante de la lame coupante 119, comme représenté sur la figure 2. De façon plus spécifique, la face de la contre-plaque 123 dirigee vers la nacelle 101, est rainurée et ces rainures se prolongent jusqu'au bord en forme d'arc de cercle 132, de sorte que le bord 132 présente une structure dentélée.

Pour permettre un centrage adéquat de la lame tournante 119, dans sa position de travail au voisinage immédiat du bord supérieur crénelé 132 de la contre-plaque, des taquets filités 133, à hauteur réglable, sont prévus sur le bras support horizontal 116' pour venir coopérer avec le fond de la gorge 134 du bâti du dispositif de coupe 102 venant recouvrir le bras horizontal 116'. Une poignée 135, sur le côté du dispositif de coupe 102, permet son basculement entre sa position de travail et sa position de dégagement. Le pivotement du dispositif de coupe 102 est limité dans sa position de dégagement par une butée fixe 136, solidaire de la partie verticale 105 du châssis 100 et munie avantageusement d'un commutateur de sécurité 137, pour empêcher la mise en marche du moteur 120 de la lame tournante 119, dans la position dégagée du dispositif de coupe 102.

Celui-ci comporte en outre, sur sa face inférieure, une série de déflecteurs profilés 138 se prolongeant, comme on le voit bien sur les figures 1 et 2, jusqu'au voisinage de l'entrefer entre la lame tournante 119 et la contre-plaque 123, pour guider les tranches de saumon découpées, conformément au procédé selon la demande principale lors de la remontée de la nacelle 101, et les accompagner dans leur mouvement balistique, figuré par la flèche 139 sur la figure 1 vers le tapis de réception où les tranches viennent s'empiler successivement dans l'ordre. Pour limiter ce mouvement balistique, on prévoit en outre, comme représenté sur la figure 1, des lanières souples 140, pour rabattre les tranches coupées 141 sur le convoyeur 200, de la structure de réception 104. Des flasques latéraux 142, par exemple en matière plastique transparente, sont en outre prévus de part et d'autre du trajet normal des tranches découpées 141. On remarquera, sur les figures, que, conformément à un aspect de la présente invention, l'axe du moteur 120 prévu pour entraîner en rotation la lame tournante 119 à des vitesses allant jusqu'à 3000 tours/mn est prolongé au-delà du moteur 120, dans la direction opposée à la lame 119, par un élément d'axe en saillie 143, comportant des moyens d'accouplement à un dispositif d'entraînement de façon à permettre de faire tourner la lame 119, dans la position de dégagement du dispositif 102 représentée sur la figure 3, à une vitesse inférieure à sa vitesse nominale de rotation en vue du réaffutage de la lame.

Le plateau support 109 de la nacelle 101 est monté à pivotement autour de sa partie inférieure sur les joues 108, 108', son inclinaison par rapport à la verticale étant réglée et fixée par des écrous coopérant avec des tiges filetées faisant saillie latéralement au travers de lumières en forme d'arc de cercle 144 formées dans les joues 108 et 108'. Coopérant avec le plateau support 109, est prévue une plaque 145, montée à pivotement libre à sa partie supérieure autour d'un axe d'articulation 146 entre les joues 108 et 108', et sollicitée par un ressort de rappel 147, fixé à des tétons latéraux de la plaque faisant saillie hors d'ouvertures 148 formées dans les jous 108 et 108', de façon à venir porter par son bord inférieur dentelé contre le plateau 109. La plaque 145 définit donc ainsi avec le plateau 109 une goulotte d'introduction pour les filets de saumon destinés à être mis en place dans la machine comme figuré par la flèche 149 sur la figure 1, l'orientation de la plaque 145 maintenue par le ressort de rappel 147 s'opposant à d'éventuels mouvements de remontée du filet de saumon installé sur le plateau 109.

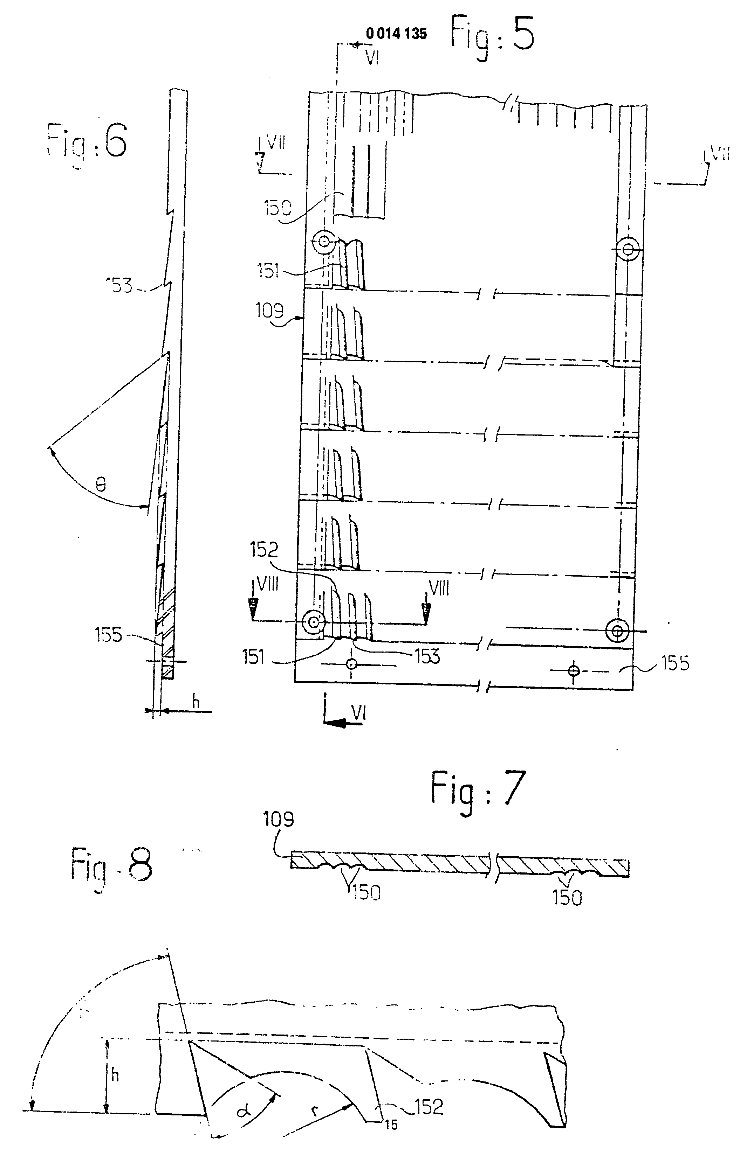

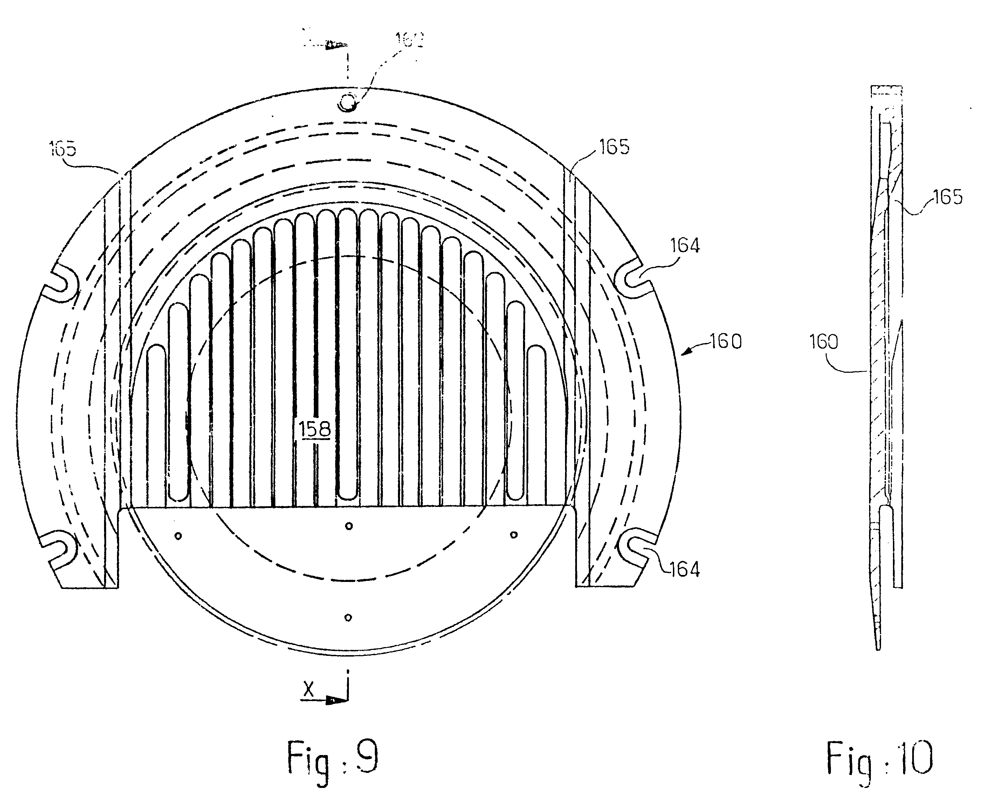

En référence avec les figures 6 à 8, le plateau 109 selon la présente invention comporte en outre des moyens de guidage et de maintien particuliers du filet de saumon pour empêcher sa remontée lors des mouvements de va-et-vient de la nacelle 101 et pour s'opposer au couple de rotation immanquablement induit par la pénétration de la lame tournante 119 dans la chair du filet. Comme on le voit bien sur la figure 5, la face du plateau 109 dirigée vers le dispositif de coupe 102 comporte à sa partie supérieure des rainures cylindriques droites 120, également visibles sur la figure 7, et, conformément à la présente invention, à sa partie inférieure, au moins une rangée de protubérances profilées 151, obtenues par découpe du plateau 109 de façon à former des nervures saillantes longitudinales 152, et des becs en dents de scie 153, suivant des profils apparaissant sur les figures 5, 6 et 8. De même, pour s'opposer au couple induit par la lame tournante, les protubérances sont réalisées dissymétriquement par rapport à la direction longitudinale du plateau 109 ainsi qu'il apparaît sur les figures 5 et 8. Les protubérances sont réalisées par fraisage de la matière du plateau 109, par exemple en duralumin, de façon à former des angles et des arêtes vifs et coupants. A titre d'exemple pour un plateau 109 d'épaisseur de l'ordre de 8 mm, la profondeur de saillie des becs 153 est $h = 3,5$ mm, l'angle d'inclinaison $\Theta$ des becs 153 (figure 6) étant de $45°$. De même, le profil dissymétrique, représenté en coupe transversale sur la figure 8, présente pour une même profondeur $h$ de 3,5 mm, des angles de dépouille $\beta = 75°$ et $\alpha = 45°$, le rayon $r$ des rainures, étant de l'ordre de 4 mm. Dans un mode de réalisation préféré la partie inférieure du plateau, comporte entre 2 et 6 rangées transversales de protubérances 151. Egalement, de préférence, la lame racleuse 154, consommable, en matière plastique, montée sur le méplat 155 à l'extrémité inférieure du plateau 109 présente également des nervurages inclinés dans la direction générale des protubérances 151 mais avec un angle plus important par rapport à la verticale, comme représenté sur la figure 3.

Comme on le voit également sur cette figure, 3, une ouverture oblongue transversale 170 est formée dans la plaque supérieure 114 de la base du châssis 100 au niveau du raccordement entre les deux ailes de ce châssis, c'est-à-dire au niveau du plan vertical de coupe des filets. Cette ouverture. donne ainsi accès à un bac de récupération des déchets de coupes des filets, formé dans la base du châssis, des lumières latérales 171 étant formées dans les flans latéraux du capotage de cette base pour permettre l'extraction de ces déchets et le nettoyage du bac.

On s'attachera maintenant à un autre aspect particulier de la présente invention, représenté plus en détail sur la figure 4. Pour faciliter l'accès et le nettoiement du dispositif de coupe 102, la lame tournante 119 est réalisée sous la forme d'un disque présentant une couronne périphérique de coupe 156, s'étendant en déport vers l'extérieur par rapport au corps du disque, celui-ci étant monté sur l'axe du moteur 120 au moyen d'un écrou central unique 157. De façon complémentaire, la structure de contre-lame 122 comprend une contre-lame proprement dite en deux parties, à savoir une partie principale ou viole 158, et une partie amovible ou bavette 159 portées par un châssis support en forme d'arc de cercle 160, représenté sur les figures 9 et 10, dont la farce arrière est conformée pour épouser étroitement, sans contact, le profil externe de la lame tournante 119 de façon à ne laisser affleurer qu'une faible partie de la couronne tranchante 156 radialement par rapport au bord périphérique de la bavette 159.

Le carter 121 de la lame tournante 119 présente une collerette d'extrémité 161, servant au montage de la structure de contre-lame 122. Celle-ci est susceptible d'être articulée au voisinage de son extrémité opposée à la bavette 159 sur une tige 162, solidaire de la collerette 161 de façon à pouvoir être basculée dans la position représentée sur la figure 4 et être ramenée, en vue de son montage, plaquée contre la surface frontale de la collerette 161 en étant maintenue contre celle-ci par des boulons pivotants 163 venant se loger dans des gorges radiales 164 du châssis 160. Cet agencement permet de dégager complètement la contre-lame 122, par exemple pour le nettoyage ou le changement de la bavette 159 ou l'affutage de la lame 119, et sa remise en place sans modification des réglages initiaux. On remarquera que le châssis 160 comporte, sur sa face avant, des rainures 165 pour réaliser un dégagement par rapport aux arêtes frontales des joues 108 et 108' de la nacelle 101.

Conformément à une autre caractéristique de la présente invention, le dispositif de tranchage est complété pour une structure séparée de convoyeur 104 permettant la réception, le tri, et le pré-conditionnement des tranches coupées 141 en vue de la reconstitution des filets de saumon. Cette structure de convoyeur comprend un convoyeur à bande proprement dit 200, entraîné par un moto-réducteur électrique disposé dans un bloc de puissance et de commande 201. La structure de convoyeur 104 comporte une partie faisant saillie en porte-à-faux 202, constituée par une extrémité du convoyeur 200 et de largeur hors tout légèrement supérieure à celle du convoyeur à bande, et une partie de châssis, montée sur des pieds support 203 terminés par des roulettes 204 et des dispositifs de réglage de hauteur 205 et présentant, sur au moins un côté du convoyeur à bande 200, avantageusement sur les deux côtés de celui-ci, des plaques latérales longitudinales 206 formant plan de travail pour les opérations afin de réceptionner, ranger, et empiler les filets de saumon en provenance de la machine de tranchage.

On comprendra aisément de ce qui précède que la mise en oeuvre de la machine s'effectue de la façon suivante: le dispositif de coupe 102 et la structure de contre-plaque 103 étant disposés en position de travail, comme représenté sur la figure 1, le plateau support 109 est réglé avec une inclinaison convenable correspondant aux dimensions des filets de saumon considérés. La structure de convoyeur 104 est amenée de façon que l'extrémité extérieure de la partie en porte-à-faux 202 vienne au niveau de la zone d'éjection des tranches entre la contre-plaque 123 et la lame tournante 119, sa hauteur étant éventuellement réglée par les dispositifs de réglage 205. La manette 129 est actionnée pour placer la contreplaque 123 dans une position correspondant à une épaisseur de tranche standard, puis la machine est mise en route. L'opérateur prend les filets de saumon congelés et fumés et les jette simplement, la partie de queue la première successivement dans la goulotte d'entrée formée entre la plaque de guidage et de maintien 145 et le plateau 109, comme figuré par la flèche 149. Le filet de saumon est alors automatiquement progressivement tranché, le filet descendant de lui-même par gravité au fur et à mesure du tranchage, en étant guidé et maintenu par les protubérances 151 et la plaque 145. Quand un filet de saumon a été tranché, l'opérateur jette ensuite un autre filet, comme précémment mentionnée sans qu'il soit nécessaire d'interrompre le mouvement de va-et-vient de la nacelle 101. Les tranches 141 sont progressivement empilées sur le convoyeur 200, puis dégagées sur les plans de travail latéraux 206.

Avec une telle machine, il est possible d'obtenir, avec un moteur 113 tournant à 2800 tours par minute, des cadences de battement de la nacelle 101 atteignant 180 coups par minute et autorisant le tranchage de cinq filets de saumon par minute, soit environ 300 saumons par heure. La machine selon la présente invention est utilisée en continu, sans nécessiter d'arrêt pour la mise en place des filets, ou pour leur positionnement dans la nacelle, indépendamment des tailles des filets de saumon, à la différence des machines existantes à main où la cadence maximale autorisée est de 50 coups par minute avec nécessité de régler les plaques de guidage et de maintien latérales du saumon pour chaque variation de format des saumons à découper.

## Revendications

1. Dispositif pour le tranchage de filets plus particulièrement de saumon, comprenant un dispositif de coupe monté sur un bâti (102) et comportant une lame (119) tournant dans un plan sensiblement vertical, une contre-plaque d'appui (123), une nacelle (101) de support de filet montée de façon à pouvoir se déplacer suivant un mouvement de va-et-vient au voisinage de la lame tournante, la nacelle comprenant un plateau support nervuré (109), incliné par rapport à la verticale, caractérisé en ce que la nacelle support (101) est montée sur un chassis (100) de façon à se déplacer suivant un mouvement de va-et-vient sensiblement vertical au voisinage de la lame tournante (119) et comporte en outre des moyens de guidage (150, 151) pour guider le filet lors de sa descente et de sa coupe et l'empêcher de remonter lors du mouvement de va-et-vient de la necelle.

2. Dispositif selon la revendication 1, caractérisé en ce que la nacelle (101) comporte en outre des moyens de maintien (151) pour empêcher une rotation relative du filet par rapport au plateau (109) lors de opérations de coupe.

3. Dispositif selon la revendication 1 ou la revendication 2, caractérisé en ce que les moyens de guidage sont constitués par au moins une rangée transversale de protubérances (151) à angles vifs profilées vers le bas de la nacelle et formées au moins à la partie inférieure de la surface du plateau (109).

4. Dispositif selon la revendication 2 et la revendication 3, caractérisé en ce que les moyens de maintien sont constitués par lesdites protubérances profilées, leur profil de découpe étant, en vue en plan du plateau, dissymétrique par rapport à la direction longitudinale du plateau.

5. Dispositif selon l'une quelconque des revendications 1 à 4, caractérisé en ce qu'il comporte en outre une plaque (145) montée articulée sur la nacelle et rappelée par un organe élastique (147) de façon à porter par son bord inférieur contre la surface du plateau (109) en formant un angle avec le plan du plateau, cette plaque définissant avec le plateau un passage d'introduction et de mise en place du filet dans le dispositif de tranchage et complétant les moyens de guidage pour empêcher le filet de remonter lors des mouvements de va-et-vient de la nacelle.

6. Dispositif selon l'une quelconque des revendications 1 à 5, caractérisé en ce qu'il comporte un châssis de forme générale en L (100) la nacelle étant montée à coulissement dans une première branche verticale du L (105), la surface supérieure de la deuxième branche du L présentant un plan d'appui sensiblement horizontal (114), le dispositif de coupe (102) étant monté sur des bras horizontaux (116, 116') fixés a la première branche du L, et s'étendant dans la direction opposée à la nacelle, à distance et au-dessus dudit plan d'appui.

7. Dispositif selon la revendication 6, caractérisé en ce que le dispositif de coupe (102) est monté de façon à pouvoir tourner sur un desdits bras horizontaux (116) entre une position de travail et une position de dégagement, des moyens déverrouillables (118') étant prévus sur l'autre bras horizontal pour bloquer de façon réglable le dispositif de coupe en position de travail.

8. Dispositif selon l'une quelconque des revendications 6 ou 7, caractérisé en ce que la contre-plaque (123) est fixée sur une structure support (124, 126) elle-même montée sur le plan d'appui (114) de façon à pouvoir pivoter autour d'un axe horizontal, distant du plan de la contre-plaque, entre une première position réglable de travail et une position de dégagement.

9. Dispositif selon la revendication 8, caractérisé en ce qu'il comporte des moyens réglages (128, 129) pour ajuster la position de la contre-plaque (123) par rapport à la lame tournante (119) lorsque la structure porteuse (126) de la contre-plaque est bloquée dans la première position de travail.

10. Dispositif selon la revendication 9, caractérisé en ce que la structure porteuse (124, 126) de la contre-plaque a la forme générale d'un L, la contre-plaque étant montée sur une premiere branche (124) du L, des bras diagonaux (127) reliant l'extrémité libre de la contre-plaque à l'extrémité opposée de la deuxième branche du L (126), les moyens de réglage comportant des surfaces de came (121) coopérantes sur l'extrémité des bras diagonaux opposés à la contre-plaque et la seconde branche du L.

11. Dispositif selon l'une quelconque des revendications 1 à 10, caractérisé en ce que le dispositif de coupe comprend un ensemble de contre-lame amovible (122) susceptible d'être déplacé entre une position de dégagement et une position verrouillable de travail, sans modifier les réglages vis-à-vis de la lame de coupe dans ladite position de travail, la contre-lame présentant une surface rainurée (158).

12. Dispositif selon la revendication 11, caractérisé en ce que l'ensemble de contre-lame (122) comprend une partie d'extrémité amovible (159).

13. Dispositif selon l'une quelconque des revendications 1 à 12, caractérisé en ce qu'il comprend en outre une structure séparée de convoyeur — récepteur (104) montée sur un châssis mobile et comprenant une partie s'étendant en porte-à-faux (202) constituée essentiellement par une extrémité d'un convoyeur à bande horizontale (200), l'autre partie de la structure de convoyeur comportant sur au moins un côté du convoyeur à bande un plan de travail (204) sensiblement coplanaire au convoyeur, l'extrémité du convoyeur formant la partie en. porte-à-faux étant susceptible d'être amenée sélectivement au voisinage du dispositif de coupe (102) pour réceptionner les tranches découpées.

14. Dispositif selon l'une quelconque des revendications 1 à 13, caractérisé en ce que le dispositif de coupe comporte des éléments déflecteurs profilés (138) pour guider les tranches découpées (140) lors de leur expulsion balistique du dispositif de coupe.

**Patentansprüche**

1. Vorrichtung zum Tranchieren von Filetstükken, insbesondere des Lachses, mit einer auf einem Gestell (102) befestigten Schneidanordnung, die eine sich in einer im wesentlichen vertikalen Ebene drehende Klinge (119) aufweist, und mit einer Stützplatte (123), mit einer Tragbühne für das Filet, die so angeordnet ist, daß sie eine Hin- und Herbewegung in der Nähe der sich drehenden Klinge ausführen kann, wobei die Tragbühne eine gerippte Tragplatte (109) aufweist, die geneigt zur Vertikalen ist, dadurch gekennzeichnet, daß die Tragbühne (101) auf einem Gehäuse (100) derart angeordnet ist, daß sie in der Nähe der sich drehenden Klinge (119) ein im wesentlichen vertikale Hin- und Herbewegung ausführen kann und daß sie Führungsmittel (150, 151) aufweist, zum Führen des Filets während ihrer Abwärts- und Schneidbewegung und damit dessen Wiederanstieg während der Hin- und Herbewegung der Tragbühne verhindert.

2. Vorrichtung nach Anspruch 1, dadurch gekennzeichnet, daß die Tragbühne (101) außerdem Haltemittel (151) aufweist, um eine Relativverdrehung des Filets bezüglich der Platte (109) während der Schneidvorgänge zu verhindern.

3. Vorrichtung nach Anspruch 1 oder 2, dadurch gekennzeichnet, daß die Führungsmittel aus wenigstens einer Querreihe von Vorsprüngen (151) mit spitzen, nach unten zur Tragbühne hin ausgerichteten Winkeln bestehen und wenigstens am unteren Teil der Fläche der Platte (109) angeordnet sind.

4. Vorrichtung nach Ansprüchen 2 und 3, dadurch gekennzeichnet, daß die Haltemittel durch die ausgerichteten Vorsprünge gebildet sind, wobei ihr Schneidprofil, in der Ebene der Platte gesehen, asymmetrisch bezüglich der Längsrichtung der Platte ist.

5. Vorrichtung nach einem der Ansprüche 1 bis 4, dadurch gekennzeichnet, daß sie zusätzlich ein gelenkig an der Tragbühne angeordnetes Plättchen (145) aufweist, das unter der Rückholkraft eines elastischen Teils (147) derart steht, daß sein unterer Rand sich an der Fläche der Platte (109) abstützt und dabei einen Winkel mit der Ebene dieser Platte bildet, wobei das Plättchen mit der Platte eine Einführungs- und Ausrichtpassage für das Filet in die Schneidvorrichtung bildet und damit die Führungsmittel zur Verhinderung des Wiederanstiegs des Filet während der Hin- und Herbewegung der Tragbühne vervollständigt.

6. Vorrichtung nach einem der Ansprüche 1 bis 5, dadurch gekennzeichnet, daß sie einen im allgemeinen L-förmigen Aufbau (100) aufweist, wobei die Tragbühne gleitbar an einem ersten senkrechten Arm des L (105) angeordnet ist, die obere Fläche des zweiten Armes des L eine im wesentlichen waagerechte Stützfläche (114) bildet und die Schneidanordnung (102) an den waagerechten, am ersten Arm des L befestigten Armen (116, 116') befestigt ist um sich in der zur Tragbühne entgegengesetzten Richtung im Abstand von und oberhalb der Stützfläche zu erstrecken.

7. Vorrichtung nach Anspruch 6, dadurch gekennzeichnet, daß die Schneidanordnung (102) derart an einen der waagrechten Arme (116) angeordnet ist, daß sie zwischen einer Arbeitsstellung und einer Freistellung verdrehbar ist und daß Entriegelungsmittel (118') am anderen waagrechten Arm vorgesehen sind um in einstellbarer Weise die Schneidanordnung in ihrer Arbeitsstellung zu verriegeln.

8. Vorrichtung nach einem der Ansprüche 6 oder 7, dadurch gekennzeichnet, daß die Stützplatte (123) an einer Haltestruktur (124, 126) befestigt ist, die wiederum an der Stützfläche (114) derart angeordnet ist, daß sie um eine waagrechte Achse im Abstand von der Ebene der Stützplatte zwischen einer ersten einstellbaren Arbeitsstellung und einer Freistellung verdrehbar ist.

9. Vorrichtung nach Anspruch 8, dadurch gekennzeichnet, daß sie regelbare Mittel (128, 129) zur Einstellung der Lage der Stützplatte (123) bezüglich der sich drehenden Klinge (119) aufweist, wenn der Tragaufbau (126) der Stützplatte in der ersten Arbeitsstellung verriegelt ist.

10. Vorrichtung nach Anspruch 9, dadurch gekennzeichnet, daß der Tragaufbau (124, 126) der Stützplatte eine im allgemeinen L-förmige Form aufweist, daß die Stützplatte an einem ersten Arm (124) des L befestigt ist, daß diagonale Arme (127) das freie Ende der Stützplatte mit dem gegenüberliegenden Ende des zweiten Armes des L (126) verbinden und daß die Regelmittel Nockenflächen (121) aufweisen, die mit dem Ende der der Stützplatte und dem zweiten Arm des L diagonal gegenüberliegenden Arme zusammenwirken.

11. Vorrichtung nach einem der Ansprüche 1 bis 10, dadurch gekennzeichnet, daß die Schneidanordnung eine Einheit aus einem abnehmbaren Gegenmesser (122) aufweist, das von einer Freistellung in eine verriegelbare Arbeitsstellung verschoben werden kann ohne Veränderung der Einstellungen bezüglich der Schneidklinge in der Arbeitsstellung, wobei das Gegenmesser eine gerillte Oberfläche (158) aufweist.

12. Vorrichtung nach Anspruch 11, dadurch gekennzeichnet, daß die Einheit des Gegenmessers (122) ein abnehmbares Endteil (159) aufweist.

13. Vorrichtung nach einem der Ansprüche 1 bis 12, dadurch gekennzeichnet, daß sie fernerhin einen getrennten Förder-Ablageaufbau (104) aufweist, der an einem beweglichen Gestell angeordnet ist und einen freitragenden Teil (202) aufweist, der im wesentlichen aus einem Ende eines waagrechten Förderbandes (200) besteht, während das andere Teil des Förderaufbaus an wenigstens einer Seite des Bandförderers eine Arbeitsebene (204) aufweist, die im wesentlichen koplanar zum Förderer ist, wobei das Ende des Förderers, das das freitragende Teil bildet, in der Lage ist, wahlweise in die Nähe der Schneidanordnung (102) gebracht zu werden um die abgeschnittenen Scheiben aufzunehmen.

14. Vorrichtung nach einem der Ansprüche 1 bis 13, dadurch gekennzeichnet, daß die Schneidanordnung profilierte Abweiselemente (138) aufweist und die abgeschnittenen Scheiben (140) während ihres ballistischen Auswerfens von der Schneidanordnung zu führen.

## Claims

1. A device for slicing filets of fish, more especially filets of salmon, including a cutting device installed on a base (102) and including a blade (119) rotating in a substantially vertical plan, a back-up counter-plate (123), and a filet support stand (101) installed so as to be alternatively moved in the vicinity of rotating blade, said stand including a grooved support table (109), angled to the vertical, wherein support stand (101) is assembled on a frame 100 in order to be alternatively moved in a substantially vertical plan in the vicinity of rotating blade (119) and further includes guiding means (150 – 151) adapted to guide a filet when being lowered and cut and to prevent it from raising when stand is reciprocating.

2. The device of claim 1, wherein said stand (101) further includes retaining means (151) in order to prevent said filet from relatively rotate with reference to table (109) when cutting is carried out.

3. The device of claim 1 or claim 2, wherein said guiding means are formed of at least one tranverse row of sharp angle projections (151) shaped towards stand bottom and arranged at least at the lower part of table (109) surface.

4. The device of claim 2 and claim 3, wherein said retaining means are formed by said shaped projections, their cutting contour being, in a plan view of said table, asymmetric with respect to table longitudinal direction.

5. The device of any claim 1 to 4, further including a stand hinged plate (145) and biaised by resilient element (147) in order to have the lower edge thereof bearing against table (109) surface whilst being angled with respect to table plan, this plate defining with said table a passage for introducing and locating filet in cutting device and completing said guiding means in order to prevent filet from rising when stand is reciprocating.

6. The device of any claim 1 to 5, including a L shape frame (100), said stand being slidably mounted in a first vertical leg of L shape frame, the upper surface of second leg thereof showing a substantially horizontal bearing plan (114), with cutting device (102) being fixed to horizontal arms (116 – 116') attached to first leg, and extending away from said stand, spaced apart and above said bearing plan.

7. The device of claim 6, wherein said cutting device (102) is mounted in order to be able to rotate in one of said horizontal arms (116) between a working position and a clearing one, lockable means (118) being provided on the other horizontal arm in order to adjustably lock said cutting device in its working position.

8. The device of any claim 6 or 7, wherein counter-plate (123) is attached to a support structure (124, 126) which is itself assembled on said bearing plan (114) in order to be able to pivot around an horizontal axle, spaced from said counter-plate plan, between a first working adjustable position and a clearing position.

9. The device of claim 8, including adjustable means (128, 129) to adjust said counter-plate (123) position with respect to rotating blade (119) when said counter-plate bearing structure (126) is locked in the first working position.

10. The device of claim 9, wherein said counter-plate bearing structure (124 – 126) has a generally L shape configuration, said counter-plate being mounted on first leg (124) thereof, diagonal arms (127) connecting the free end of said counter-plate to the opposed end of second leg thereof (126), said adjusting means including cooperating cam surfaces (121) on the end of diagonal arms opposed from counter-plate and L frame second leg.

11. The device of any claims 1 to 10, wherein cutting device includes a movable counter-blade assembly (122) subject to being moved between a clearing position and a working lockable position, without altering any adjustments concerning cutting blade when in working position, said counter blade showing a grooved surface (158).

12. The device of claim 11, wherein counter-blade assembly (122) includes a movable end portion (159).

13. The device of any claim 1 to 12, further including a separate conveyor-receiver structure (104) assembled on a movable frame and including an overhang extending part (202) essentially formed of an end of an horizontal belt conveyor (200), the other part of the conveyor structure comprising on at least one side of the belt conveyor a working plan (204) substantially coplanar with the conveyor, the conveyor end forming the overhang part being subject to be selectively brought to the vicinity of cutting device 102 for receiving cut slices.

14. The device of any claim 1 to 13, wherein cutting device includes shaped deflector elements (138) so as to guide cut slices (140) when balistically projected from cutting device.

Fig : 1

Fig: 2

Fig: 3

Fig: 4

Fig:5

0 014 135

Fig:6

Fig:7

Fig:8

Fig. 10

Fig. 9